# EUROPÄISCHE PATENTSCHRIFT

(11) **EP 0 857 593 B1**
(45) Veröffentlichungstag und Bekanntmachung des Hinweises auf die Patenterteilung: **13.04.2005**
(21) Anmeldenummer: 98101705.6
(22) Anmeldetag: 02.02.1998
(51) Int. Cl.: B60H 1/00

(54) **Klimaanlage für den Innenraum eines Fahrzeuges**
Air conditioning device for the vehicle compartment
Dispositif de climatisation pour l'habitacle d'un véhicule

(30) Priorität: 05.02.1997 DE 19704254
(43) Veröffentlichungstag der Anmeldung: 12.08.1998
(73) Patentinhaber: Hella KGaA Hueck & Co., 59552 Lippstadt (DE)
(72) Erfinder: Brammer, Rüdiger, 59558 Lippstadt (DE); Knittel, Otto, 59494 Soest (DE)

(56) Entgegenhaltungen:
- DE-A- 3 836 596
- DE-A- 4 214 702
- US-A- 5 427 313

## Beschreibung

Die Erfindung betrifft eine Klimaanlage für den Innenraum eines Fahrzeuges und insbesondere die Steuerung einer solchen Klimaanlage im Umluft-Betrieb bzw. unmittelbar nach Umschaltung vom Umluft-Betrieb auf den Frischluft-Betrieb.

Klimaanlagen für den Innenraum eines Fahrzeuges verfügen im allgemeinen über einen Innenraumtemperaturfühler, anhand von dessen Ausgangssignal sich der Ist-Wert der Temperatur im Fahrzeug-Innenraum ermitteln läßt. Über ein Gebläse wird dem Innenraum temperierte Luft zugeführt. Die Temperierung der dem Innenraum zuzuführenden Luft erfolgt in einer Heiz-/Kühlvorrichtung. Neben dem Innenraumtemperaturfühler verfügt eine Fahrzeugklimaanlage im Regelfall auch über einen Außentemperaturfühler und ggf. einen Sonnendetektor. Schließlich weisen Klimaanlagen im allgemeinen eine Umluft-/Außenluft-Verstellvorrichtung (zumeist in Form einer Klappe realisiert) auf, die es ermöglicht, daß im Frischluft-Betrieb das Gebläse von außen Frischluft (Außenluft) ansaugt und in den Fahrzeug-Innenraum transportiert. Ferner läßt sich die Klimaanlage mittels der Umluft-/Außenluft-Verstellvorrichtung im Umluft-Betrieb fahren, indem Luft aus dem Fahrzeug-Innenraum durch das Gebläse angesaugt und dem Fahrzeug-Innenraum wieder zugeführt wird. Schließlich verfügen die bekannten Klimaanlagen über eine Steuereinheit, die das Gebläse (Gebläsespannung) die Heiz-/Kühlvorrichtung und die Umluft-/Außenluft-Vorrichtung sowie ggf. die Luftverteilung auf unterschiedliche Ausblasöffnungen sowie andere Komponenten der Klimaanlage steuert. Die Steuereinheit arbeitet hauptsächlich in Abhängigkeit von der Differenz zwischen dem aktuellen Ist-Wert und dem eingestellten Soll-Wert der Innenraumtemperatur. Ferner kann die Steuereinheit weitere Eingangsparameter, wie beispielsweise die Außentemperatur und die Sonnenintensität aufweisen.

Die Strömungsverhältnisse im Innenraum des Fahrzeuges sind in den beiden Betriebsarten (Frischluft-Betrieb und Umluft-Betrieb) recht unterschiedlich. Während nämlich im Frischluft-Betrieb die ausströmende Luft über im hinteren Bereich des Fahrzeug-Innenraums angeordnete Öffnungen wieder ausströmt, wird im Umluft-Betrieb die ausströmende Luft über eine sich üblicherweise im vorderen Fußraumbereich des Fahrzeuges befindende Ansaugöffnung wieder angesaugt. Damit kommt es im Frontbereich des Fahrzeug-Innenraums zu einem strömungstechnischen Kurzschluß. Die in beiden Betriebszuständen unterschiedlichen Strömungsverhältnisse im Fahrzeug-Innenraum führen dazu, daß der Innenraumtemperaturfühler in beiden Betriebszuständen unterschiedlich angeströmt wird, was wiederum zur Folge hat, daß sich unterschiedliche Temperaturniveaus am Innenraumtemperaturfühler einstellen. So hat sich beispielsweise in der Praxis gezeigt, daß im sogenannten Pull-Down-Betrieb, bei dem die Klimaanlage auf Umluft-Betrieb geschaltet ist, um den Innenraum des Fahrzeuges möglichst schnell abzukühlen, der Innenraumtemperaturfühler einem niedrigeren Temperaturniveau als für die Innenraumtemperatur repräsentativ ausgesetzt ist als im Frischluft-Betrieb. Das heißt, daß sich selbst bei gleichbleibender Temperatur der angesaugten Luft und bei unveränderter Einstellung des Gebläses und der Heiz-/Kühlvorrichtung zwischen Frischluft-Betrieb und Umluft-Betrieb allein durch die Veränderung der Strömungsverhältnisse mit dem Innenraumtemperaturfühler unterschiedliche Werte messen lassen.

Bei den bekannten Klimaautomaten wird das Regelsystem beim Wechsel von Umluft-Betrieb auf Frischluft-Betrieb versuchen, die Innenraumtemperaturveränderung, die der Innenraumtemperaturfühler (fälschlicherweise) meldet, auszuregeln. Insbesondere beim automatischen Umschalten vom Umluft-Betrieb auf den Frischluft-Betrieb, der nicht bewußt vom Bediener ausgelöst wird, macht sich dieser Effekt der Ausregelung bemerkbar. Die in diesem Fall vom Innenraumtemperaturfühler erfaßte Temperaturerhöhung führt zu einem Gegenregelvorgang, der eine deutliche Anhebung der Gebläsespannung und bei einem bezüglich seiner Kälteleistung nahezu erschöpften System ein erneutes Umschalten auf Umluft-Betrieb bewirken kann (Cycle-Vorgang).

Ähnliche Verhältnisse und Unannehmlichkeiten wie oben beschrieben stellen sich auch ein, wenn auf Umluft-Betrieb geschaltet wird, um den Innenraum des Fahrzeuges möglichst schnell aufzuheizen, was z. B. bei niedrigen Außentemperaturen und/oder (noch) nicht vollständig zur Verfügung stehender Wärmeleistung der Klimaanlage erforderlich sein kann.

Der Erfindung liegt die Aufgabe zugrunde, eine Klimaanlage für den Innenraum eines Fahrzeuges und insbesondere den Betrieb einer derartigen Klimaanlage dahingehend zu verbessern, daß Cycle-Vorgänge beim Übergang von Umluft- auf Frischluft-Betrieb weitestgehend vermieden werden.

Zur Lösung dieser Aufgabe wird mit der Erfindung eine Klimaanlage für den Innenraum eines Fahrzeuges vorgeschlagen, die gemäß einer ersten Variante der Erfindung versehen ist mit
- einem Innenraumtemperaturfühler zur Ermittlung des Ist-Werts der Temperatur im Fahrzeug-Innenraum,
- einem Gebläse zum Zuführen von Luft in den Fahrzeug-Innenraum,
- einer Heiz-/Kühlvorrichtung zum Temperieren der dem Fahrzeug-Innenraum zuzuführenden Luft,
- einer Umluft-/Außenluft-Verstellvorrichtung, durch die in einem Umluft-Betriebszustand dem Fahrzeug-Innenraum aus dieser angesaugte Luft zuführbar ist und durch die in einem Frischluft-Betriebszustand dem Fahrzeug-Innenraum von außen angesaugte Luft zuführbar ist, und
- einer Steuereinheit zur Steuerung zumindest des Gebläses, der Heiz-/Kühlvorrichtung und der Umluft-/Außenluft-Verstellvorrichtung in Abhängigkeit von zumindest dem Ist-Wert der Innenraumtemperatur und einem vorgebbaren Soll-Wert der Innenraumtemperatur,
dadurch gekennzeichnet,
- daß die Steuereinheit derart ausgebildet ist, daß sie das Gebläse, die Heiz-/Kühlvorrichtung und die Umluft-/Außenluft-Verstellvorrichtung im Umluft-Betriebszustand unter anderem in Abhängigkeit von dem Soll-Wert und dem Ist-Wert der Innenraumtemperatur und einem vorgebbaren Offset-Wert steuert und im Frischluft-Betriebszustand ohne Berücksichtigung dieses Offset-Werts steuert.

Bei dieser Variante der Erfindung wird im Umluft-Betrieb die Regelabweichung, d. h. die Differenz zwischen dem Soll-Wert und dem Ist-Wert der Innenraumtemperatur unter Berücksichtigung eines Offset-Werts ermittelt. Dieser Offset-Wert ist vorzugsweise gleich dem beim Umschaltvorgang von Umluft-Betrieb auf Frischluft-Betrieb zu erwartenden strömungstechnisch bedingten Temperaturniveauversatzes des Innenraumtemperaturfühlers. Der (vorzeichenbehaftete) Offset-Wert kann beispielsweise zu dem aktuell ermittelten Ist-Wert der Innenraumtemperatur addiert werden bzw. von dem Soll-Wert subtrahiert werden, jedoch fahrzeugtypunabhängig vorzusehen sein. Im zwecks Abkühlung des Fahrzeug-Innenraums gewählten Umluft-Betrieb wird vorzugsweise ein positiver Offset-Wert zum aktuell ermittelten Ist-Wert der Innenraumtemperatur addiert. Im Aufheizfall wird ebenfalls mit einem Offset-Wert gearbeitet. Die Größe und/oder das Vorzeichen des Offset-Werts hängen von den Störmungsverhältnissen im Aufheizfall ab. Die Tatsache, in welchem dieser beiden Betriebszustände der Offset-Wert wie zu berücksichtigen ist, kann in Abhängigkeit von dem Fahrzeugtyp und/oder der Klimaanlage unterschiedlich sein.

Aufgrund der erfindungsgemäßen "Manipulation" der auf dem Meßwert des Innenraumtemperaturfühlers basierenden Regelabweichung wird zu Anfang des Umluft-Betriebs ein Offset-Wert aufgebracht, der dasjenige Temperaturniveau in der Umgebung des Innenraumtemperaturfühlers simuliert, das sich nach Umschaltung auf den Frischluft-Betrieb einstellen wird. Damit aber besteht für das Regelsystem bei Umschaltung von Umluft-Betrieb auf Frischluft-Betrieb keine Notwendigkeit mehr, einen Gegenregelvorgang einzuleiten. Auf diese Weise kann also ein ungewolltes wiederholtes Umschalten zwischen Umluft-Betrieb und Frischluft-Betrieb vermieden werden. Hierdurch wiederum steigt spürbar der Komfort für die Insassen, da die Umschaltung zwischen den beiden Betriebsarten stets auch mit einer Änderung des Geräuschverhaltens der Klimaanlage verbunden ist. Die Veränderung der Ausblasluftverteilung und die Veränderung der Gebläsespannung erzeugen nämlich sich verändernde Luftströmungsgeräusch, die von den Insassen als unangenehm empfunden werden. Auch die Veränderung der Verteilung der Ausblasluft auf die unterschiedlichen Ausblasöffnungen (Defroster-Öffnungen im oberen Bereich des Armaturenbretts, Mannanströmöffnungen und Fußraumöffnungen) wird als unangenehm empfunden.

Die jeweils zu wählenden Offset-Werte hängen in erster Linie von der Ausgestaltung des Innenraums und dem Leistungsvermögen der Klimaanlage ab. Die Offset-Werte werden zweckmäßigerweise empirisch ermittelt. Sie betragen insbesondere zwischen ein und drei Grad Celsius.

In vorteilhafter Weiterbildung dieser ersten Variante der erfindungsgemäßen Klimaanlage ist vorgesehen, daß der Offset-Wert beim Umschalten von Umluft-Betrieb auf Frischluft-Betrieb zeitverzögert berücksichtigt wird. Die Verzögerungszeitspanne liegt vorzugsweise zwischen 20 Sek. und 1 Min. und beträgt insbesondere etwa 30 Sek.. Durch die zeitverzögerte Berücksichtigung beim Umschalten von Umluft auf Frischluft kommt es zu einem "weichen" Übergang zwischen diesen beiden Betriebsarten, was sich in Bezug auf den Komfort der Klimaanlage vorteilhaft auswirkt. Eine Zeitverzögerung könnte auch in vorteilhafter Weise beim Übergang von Frischluft-Betrieb auf Umluft-Betrieb vorgesehen werden.

Wie bereits oben erwähnt, sind der Soll-Wert und der Ist-Wert der Innenraumtemperatur lediglich zwei Parameter, anhand derer die Steuereinheit der Klimaanlage deren Komponenten steuert. Insbesondere die automatische Umschaltung von Frischluft-Betrieb auf Umluft-Betrieb und umgekehrt erfolgt zusätzlich noch anhand der Außentemperatur und der Sonnenintensität, sofern ein Sonnensensor vorgesehen ist. Auslöser für die Umschaltung zwischen den beiden Betriebsarten ist insbesondere die Ausblastemperatur der in den Innenraum einströmenden Luft, die mittels eines Ausblastemperatursensors gemessen wird und die vom Soll-Wert und vom Ist-Wert der Innenraumtemperatur, der Außentemperatur und, sofern ein Sonnensensor vorhanden ist, von der Sonnenintensität abhängig ist. Ganz allgemein gesprochen berechnet die Steuereinheit anhand der obigen Eingangswerte eine Hauptsteuergröße, die den Wärmeenergiebedarf pro Zeiteinheit repräsentiert. Bei der ersten Variante der Erfindung wird also im Umluft-Betrieb durch Zuschalten des Offset-Werts gerade Einfluß genommen auf diese Hauptsteuergröße des Systems.

Gemäß einer zweiten Variante der Erfindung ist die Klimaanlage versehen mit
- einem Innenraumtemperaturfühler zur Ermittlung des Ist-Werts der Temperatur im Fahrzeug-Innenraum,
- einem Gebläse zum Zuführen von Luft in den Fahrzeug-Innenraum,
- einer Heiz-/Kühlvorrichtung zum Temperieren der dem Fahrzeug-Innenraum zuzuführenden Luft,
- einer Umluft-/Außenluft-Verstellvorrichtung, durch die in einem Umluft-Betriebszustand dem Fahrzeug-Innenraum aus dieser angesaugte Luft zuführbar ist und durch die in einem Frischluft-Betriebszustand dem Fahrzeug-Innenraum von außen angesaugte Luft zuführbar ist, und
- einer Steuereinheit zur Steuerung zumindest des Gebläses, der Heiz-/Kühlvorrichtung und der Umluft-/Außenluft-Verstellvorrichtung in Abhängigkeit von zumindest dem Ist-Wert der Innenraumtemperatur und einem vorgebbaren Soll-Wert der Innenraumtemperatur,
dadurch gekennzeichnet,
- daß die Steuereinheit derart ausgebildet ist, daß sie das Gebläse, die Heiz-/Kühl-vorrichtung und die Umluft-/Außenluft-Verstell-vorrichtung für eine vorgebbare Anfangszeitspanne nach einem Umschalten vom Umluft-Betriebszustand in den Frischluft-Betriebszustand unter anderem in Abhängigkeit von dem Soll-Wert der Innenraumtemperatur und dem letzten im Umluft-Betriebszustand ermittelten Ist-Wert der Innenraumtemperatur steuert und außerhalb der Anfangszeitspanne unter anderem in Abhängigkeit von dem Soll-Wert und dem jeweils aktuell ermittelten Ist-Wert der Innenraumtemperatur steuert.

Bei dieser zweiten Variante der erfindungsgemäßen Klimaanlage wird für eine insbesondere empirisch zu ermittelnde und von den Beschaffenheiten des Fahrzeuges und der Klimaanlage abhängigen Anfangszeitspanne der Innenraumtemperaturfühler außer Funktion gesetzt, so daß die Steuerung der Klimaanlage anhand des letzten vor Umschaltung auf den Umluft-Betriebszustand ermittelten Ist-Werts der Innenraumtemperatur erfolgt. Die Anfangszeitspanne ist derart bemessen, daß das örtliche Temperaturniveau, dem der Innenraumtemperaturfühler ausgesetzt ist, bei Ablauf der Anfangszeitspanne gleich dem vor der Umschaltung vorliegenden örtlichen Temperaturniveau entspricht.

Typischerweise beträgt die Anfangszeitspanne einige Minuten, vorzugsweise drei bis fünf Minuten. Bei Ablauf der Anfangszeitspanne ist damit für das Regelsystem keinerlei Notwendigkeit gegeben, einen Gegenregelvorgang einzuleiten. Das Regelsystem ist insoweit also "beruhigt".

Gemäß einer dritten Variante der Erfindung ist die Klimaanlage versehen mit
- einem Innenraumtemperaturfühler zur Ermittlung des Ist-Werts der Temperatur im Fahrzeug-Innenraum,
- einem Gebläse zum Zuführen von Luft in den Fahrzeug-Innenraum,
- einer Heiz-/Kühlvorrichtung zum Temperieren der dem Fahrzeug-Innenraum zuzuführenden Luft,
- einer Umluft-/Außenluft-Verstellvorrichtung, durch die in einem Umluft-Betriebszustand dem Fahrzeug-Innenraum aus dieser angesaugte Luft zuführbar ist und durch die in einem Frischluft-Betriebszustand dem Fahrzeug-Innenraum von außen angesaugte Luft zuführbar ist, und
- einer Steuereinheit zur Steuerung zumindest des Gebläses, der Heiz-/Kühlvorrichtung und der Umluft-/Außenluft-Verstellvorrichtung in Abhängigkeit von zumindest dem Ist-Wert der Innenraumtemperatur und einem vorgebbaren Soll-Wert der Innenraumtemperatur,
dadurch gekennzeichnet,
- daß für eine vorgebbare Anfangszeitspanne nach einem Umschalten vom Umluft-Betriebszustand in den Frischluft-Betriebszustand und/oder umgekehrt der Innenraumtemperaturfühler mit einem Tiefpaßfilter verbunden ist, und
- daß die Steuereinheit derart ausgebildet ist, daß sie das Gebläse, die Heiz-/Kühlvorrichtung und die Umluft-/Außenluft-Verstellvorrichtung während der Anfangszeitspanne in Abhängigkeit unter anderem von dem Soll-Wert der Innenraumtemperatur und dem anhand des Ausgangssignals des Tiefpaßfilters ermittelten Ist-Wert der Innenraumtemperatur steuert und außerhalb der Anfangszeitspanne in Abhängigkeit unter anderem von dem Soll-Wert der Innenraumtemperatur und dem anhand des Innenraumtemperaturfühlers direkt ermittelten Ist-Wert der Innenraumtemperatur steuert.

Bei dieser Variante der erfindungsgemäßen Klimaanlage wird im Anschluß an die Umschaltung von Umluft-Betrieb auf Frischluft-Betrieb für die Dauer einer Anfangszeitspanne ein Tiefpaßfilter aktiviert, das den Meßwert des Innenraumtemperaturfühlers filtert. Durch diese Tiefpaßfilterung bleibt die nach dem Umschalten von Umluft- auf Frischluft-Betrieb zu erwartende Veränderung des Meßwerts des Innenraumtemperaturfühlers unberücksichtigt, wodurch es zu einer Kompensation des oben beschriebenen Umstands kommt, daß sich die Umgebungstemperatur des Innenraumtemperaturfühlers zwischen den beiden Betriebszuständen ändert. Nach Ablauf der Anfangszeitspanne arbeitet die Steuereinheit wieder wie gewohnt, indem der Ist-Wert der Innenraumtemperatur anhand des Ausgangssignals des Innenraumtemperaturfühlers ermittelt wird und die sich demzufolge einstellende Differenz zwischen Soll-Wert und Ist-Wert der Innenraumtemperatur Berücksichtigung findet.

Bei dieser Variante der Erfindung wird neben einer möglicherweise vorhandenen grundsätzlichen Filterung des Innenraumtemperatur-Ist-Werts, wiensie im übrigen auch bei den anderen beiden erfindungsgemäßen Varianten vorhanden (unterlegt) sein kann, im Umschaltzeitpunkt für die Anfangszeitspanne eine zusätzliche Filterung eingeführt, die nach Ablauf dieser Anfangszeitspanne deaktiviert wird.

Nachfolgend werden anhand der Figuren Ausführungsbeispiele der Erfindung näher erläutert. Im einzelnen zeigen:
- Fig. 1: schematisch in Seitenansicht den vorderen Teil eines PKW mit Klimaanlage,
- Fig. 2: ein Blockschaltbild eines ersten Ausführungsbeispiels der Steuerung der Klimaanlage gemäß Fig 1 beim Umschalten zwischen den Betriebsarten Frischluft und Umluft und
- Fig. 3: ein zweites Ausführungsbeispiel der Steuerung der Klimaanlage gemäß Fig. 1 beim Umschalten zwischen den Betriebsarten Frischluft und Umluft.

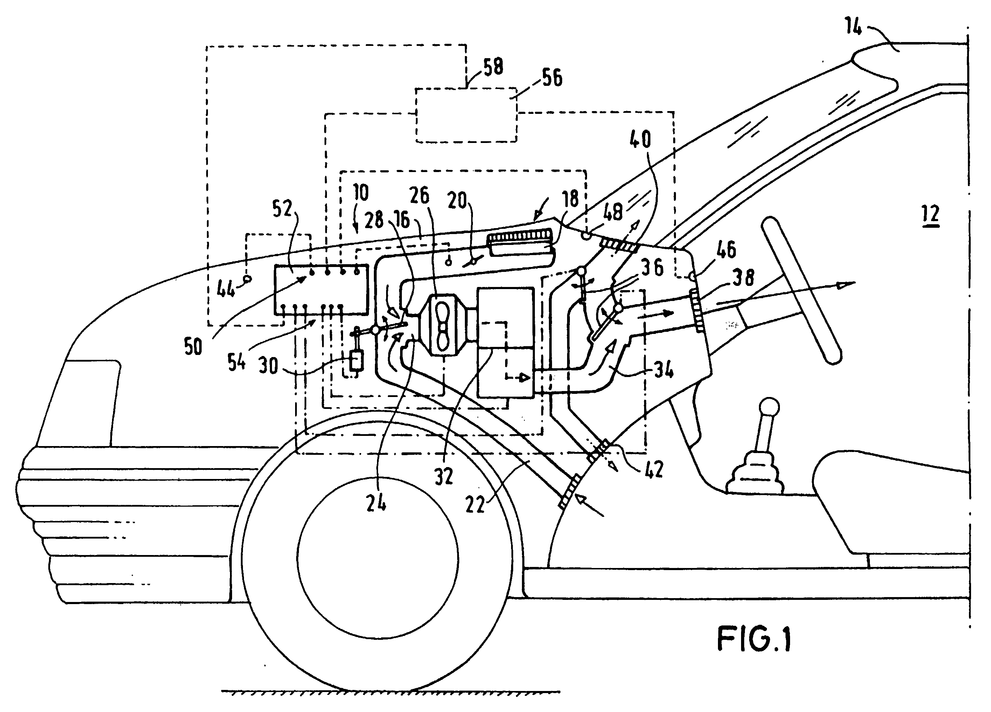

Die Klimaanlage 10 zum Versorgen des Innenraums 12 des Fahrzeuges 14 weist gemäß Fig. 1 einen Außenluft-/Frischluft-Ansaugkanal 16 auf, in dem ein Pollenfilter 18 und eine Staudruckklappe 20 angeordnet sind. Der Frischluft-Ansaugkanal 16 mündet zusammen mit einem Umluft-Ansaugkanal 22 in den Einlaß 24 eines Gebläses 26. Der Umluft-Ansaugkanal 22 ist zum bodennahen Bereich des Innenraums 12 hin offen, so daß über diesen Umluft-Ansaugkanal 22 Luft aus dem Innenraum 12 des Fahrzeuges 14 angesaugt werden kann. Vor dem Einlaß 24 des Gebläses 26 befindet sich eine Umluft-/Frischluftklappe 28, die mittels eines Stellgliedes 30 stufenlos zwischen einer Umluft-Position und einer Frischluft-Position verstellbar ist. In der Umluft-Position ist der Frischluft-Ansaugkanal 16 durch die Umluft-/Frischluftklappe 28 abgesperrt, während in der Frischluft-Position der Umluft-Ansaugkanal 22 abgesperrt ist.

Die vom Gebläse 26 angesaugte Luft wird einer luftseitig oder wasserseitig gesteuerten Heiz-/Kühlvorrichtung 32 zugeführt, von wo aus sie über ein Luftkanalsystem 34 mit Verteilerklappen 36 entweder über die Mannanströmöffnungen 38, die Defrosteröffnungen 40 oder die Fußraum-Ausblasöffnungen 42 dem Innenraum 12 zugeführt wird.

Die Klimaanlage 10 umfaßt ferner diverse Sensoren, bei denen es sich um einen Außentemperatursensor 44, einen Innenraumtemperatursensor 46 und einen Sonnensensor 48 handelt. Diese Sensoren 44 bis 48 sind mit den Eingängen 50 einer Steuereinheit 52 verbunden, deren Ausgänge 54 mit dem Stellglied 30 für die Umluft-/Frischluftklappe 28 dem Gebläse 26, der Heiz-/Kühlvorrichtung 32 und nicht dargestellten Stellgliedern für die Luftverteilklappen 36 und für die Staudruckklappe 20 verbunden sind. Zwischen dem Ausgang des Innenraumtemperatursensors 46 und dem entsprechenden Eingang 50 der Steuereinheit 52 ist eine bei 56 angedeutete Schaltungseinheit zwischengeschaltet, die einen Steuereingang 58 aufweist, der mit einem der Ausgänge 54 der Steuereinheit 52 verbunden ist.

Mit Hilfe der zuvor beschriebenen und in Fig. 1 dargestellten Klimaanlage, insbesondere mit Hilfe der Schaltungseinheit 56 läßt sich ein komfortabler Übergang vom Umluft-Betrieb in den Frischluft-Betrieb realisieren. Dieser komfortable Übergang zwischen den beiden Betriebsarten der Klimaanlage wird dadurch erreicht, daß im Umluft-Betrieb bzw. beim Umschalten von Umluft-Betrieb auf Frischluft-Betrieb berücksichtigt wird, daß sich das Temperaturniveau im Umgebungsbereich des Innenraumtemperaturfühlers aufgrund der in beiden Betriebszuständen verschiedenen Anströmungen des Innenraumtemperaturfühlers verändert.

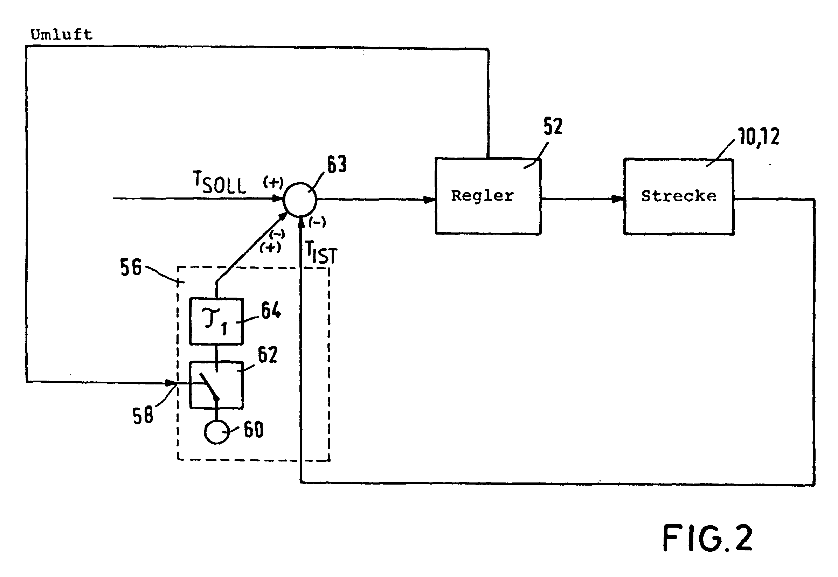

Ein erstes Ausführungsbeispiel einer Realisierung der Schaltungseinheit 56 ist in Fig. 2 gezeigt. In dieser Figur ist das Regelsystem der Klimaanlage 10 als Blockschaltbild wiedergegeben. Dabei repräsentiert der Block 10,12 die Regelstrecke, die durch die Komponenten der Klimaanlage und den Innenraum des Fahrzeuges bestimmt ist. Die Steuereinheit 52 soll den Regler definieren, an dessen Eingang die Regelabweichung anliegt, die sich aus der Differenz des Ist-Werts T_{IST} der Innenraumtemperatur und des vorgegebenen Soll-Werts T_{SOLL} der Innenraumtemperatur ergibt. Die Schaltungseinheit 56 erzeugt einen einem Offset-Temperaturwert entsprechenden Offset 60, der durch einen Schalter 62 gesteuert zum Ist-Wert der Innenraumtemperatur addiert oder von diesem subtrahiert wird. Die Addition des positiven Offset-Werts erfolgt z. B., wenn sich die Klimaanlage zwecks Abkühlung des Innenraums 12 im Umluft-Betrieb befindet. In welcher Weise der Offset-Wert nach Größe und Vorzeichen im Abkühlfall (Pull-Down) im Sommer und Aufheizfall im Winter zu berücksichtigen ist, hängt in erster Linie von den jeweiligen Strömungsverhältnisveränderungen zwischen Umluftund Frischluft-Betrieb ab. Durch die unterschiedliche Luftverteilung beim Pull-Down-Betrieb (Ausströmung der kalten Luft aus Mannanströmöffnungen 38 und Ansaugung der Luft im Fußraum) und beim Aufheizfall (Ausströmung der warmen Luft aus den Ausströmöffnungen 42 im Fußbereich und Ansaugung der Luft wiederum im Fußraum) ergeben sich unterschiedliche Anströmverhältnisse für den Innenraumtemperaturfühler 46, denen zufolge der Offset-Wert 60 auch entsprechend zu berücksichtigen ist. Zwischen dem Schalter 62 und dem Summationspunkt 63 befindet sich ein Filter 64, das eine Zeitkonstante τ₁ aufweist. Durch dieses Filter 64 wird der Offset 60 dann, wenn über die Steuereinheit 52 während der Fahrt das Signal, von Frischluft-Betrieb auf Umluft-Betrieb umzuschalten, ausgegeben wird, zeitverzögert hinzugeschaltet. Dies ist beispielsweise dann sinnvoll, wenn aufgrund erhöhter Sonneneinstrahlung oder aufgrund des Durchfahrens einer Region mit erhöhter Lufttemperatur während der Fahrt auf den Umluft-Betrieb umgeschaltet werden muß. Diese Umschaltung erfolgt dann sanft und weich. Im Umluft-Betrieb wird durch die Zuschaltung des Offsets 60 bereits das erhöhte bzw. verringerte, d. h. das veränderte Temperaturniveau in der Umgebung des Innenraumtemperaturfühlers 46 berücksichtigt, das sich nach Umschaltung des Umluft-Betriebs auf den Frischluft-Betrieb einstellen wird. Damit kommt es bei der tatsächlichen Umschaltung des Betriebszustandes zu keinerlei nennenswerten Gegenregelvorgängen der Klimaanlage 10, so daß der Übergang für die Insassen kaum spürbar und damit komfortabel erfolgt. Insbesondere kommt es nicht als Folge irgendwelcher Gegenregelvorgänge zu einem baldigen Umschalten zurück in den Umluft-Betrieb. Wegen der Anordnung des Filters 64 zwischen dem Schalter 62 und dem Summationspunkt 63 fällt der Offset-Wert 60 nach Ausschalten des Schalters 62 zeitverzögert weg.

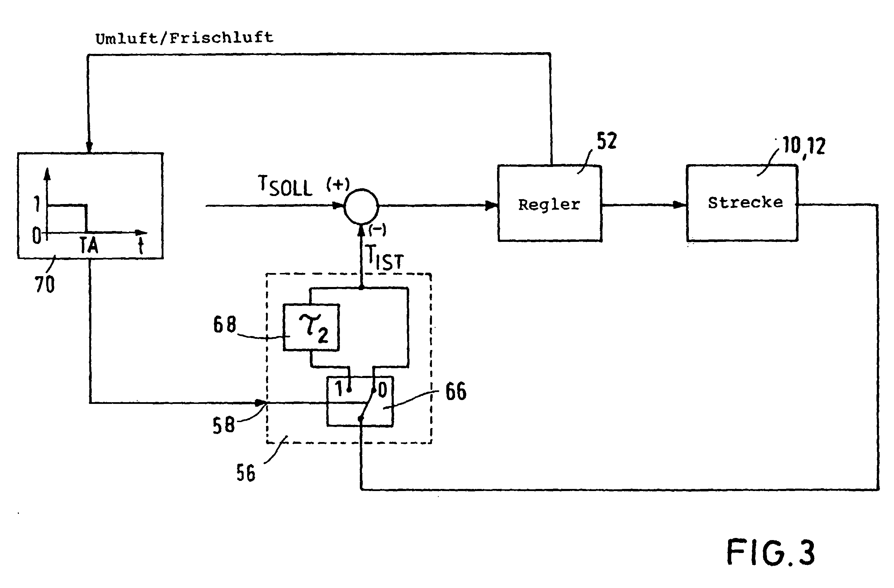

Anhand von Fig. 3 wird eine zweite Ausführungsform der Schaltungseinheit 56 der Fig. 1 nachfolgend erläutert. Soweit die Elemente des Blockschaltbilds gemäß Fig. 3 denen des Blockschaltbildes der Fig. 2 entsprechen, sind sie mit den gleichen Bezugszeichen und Bezeichnungen versehen. Die Schaltungseinheit 56 gemäß Fig. 3 weist einen von der Steuereinheit 52 steuerbaren Umschalter 66 auf, der zwischen zwei Schaltzuständen schaltet. In dem einen Schaltzustand, den der Umschalter 66 im Umluft-Betrieb sowie mit Ausnahme einer Anfangszeitspanne T_{A} nach dem Umschalten vom Umluft-Betrieb auf den Frischluft-Betrieb innerhalb des Frischluft-Betriebes einnimmt, wird der Meßwert für die Innenraumtemperatur unverändert zur Differenzbildung mit dem Soll-Wert der Innenraumtemperatur weitergeleitet. In dem zweiten Schaltzustand, den der Umschalter 66 für die Dauer der Anfangszeitspanne T_{A} nach dem Umschalten vom Umluft-Betrieb auf den Frischluft-Betrieb einnimmt, wird der Meßwert für die Innenraumtemperatur mittels eines Tiefpaßfilters 68 mit einer Zeitkonstanten τ₂ gefiltert und nach Filterung zur Differenzbildung weitergeleitet. In Folge dieser Tiefpaßfilterung bleibt die Änderung der vom Innenraumtemperaturfühler 46 gelieferten Innenraumtemperatur, wie sie sich typischerweise beim Umschalten von Umluft-Betrieb auf Frischluft-Betrieb einstellt, unberücksichtigt. Erst nach Ablauf der Anfangszeitspanne T_{A}, die drei bis fünf Minuten betragen kann, wird der Meßwert des Innenraumtemperaturfühlers 46 wieder direkt zur Differenzbildung zwecks Ermittlung der Regelabweichung benutzt. Die Anfangszeitspanne wird schaltungstechnisch z. B. durch die bei 70 dargestellte EIN/AUS-Signal-Einheit realisiert, die nach Aktivierung durch die Steuereinheit 52 für die Anfangszeitspanne T_{A} ein Ein-Signal 1 und danach ein Aus-Signal 0 für den Schalter 60 erzeugt.

Als Alternative des Blockschaltbildes gemäß Fig. 3 kann auf das Tiefpaßfilter 68 auch verzichtet werden. In diesem Fall öffnet der Umschalter 66 für die Dauer der Anfangsphase lediglich die Verbindung zur Rückführung des Meßwerts des Innenraumtemperaturfühlers 46, wobei für die Dauer der Unterbrechung in der Steuereinheit 52 der letzte Meßwert des Innenraumtemperaturfühlers 46 für die weitere Regelung verwendet wird.

### BEZUGSZEICHENLISTE

- 10: Klimaanlage
- 12: Innenraum
- 14: PKW
- 16: Frischluft-Ansaugkanal
- 18: Filter
- 20: Staudruckklappe
- 22: Umluft-Ansaugkanal
- 24: Einlaß
- 26: Gebläse
- 28: Umluft-/Frischluftklappe
- 30: Stellglied für Umluft-/Frischluftklappe
- 32: Heiz-/Kühlvorrichtung
- 34: Kanalsystem
- 36: Verteilerklappe
- 38: Mannanströmöffnung
- 40: Defrosteröffnung
- 42: Fußraum-Ausblasöffnung
- 44: Außentemperaturfühler
- 46: Innenraumtemperaturfühler
- 48: Sonnensensor
- 50: Eingang der Steuereinheit
- 52: Steuereinheit
- 54: Ausgang der Steuereinheit
- 56: Schaltungseinheit
- 58: Steuereingang der Schaltungseinheit
- 60: Offset
- 62: Schalter
- 63: Summationspunkt
- 64: Filter
- 66: Umschalter
- 68: Tiefpaßfilter
- 70: EIN/AUS-Signal-Einheit

## Patentansprüche

1. Klimaanlage für den Innenraum eines Fahrzeuges mit
- einem Innenraumtemperaturfühler (46) zur Ermittlung des Ist-Werts (T_{IST}) der Temperatur im Fahrzeug-Innenraum (12),
- einem Gebläse (26) zum Zuführen von Luft in den Fahrzeug-Innenraum (12),
- einer Heiz-/Kühlvorrichtung (32) zum Temperieren der dem Fahrzeug-Innenraum (12) zuzuführenden Luft,
- einer Umluft-/Außenluft-Verstellvorrichtung (28), durch die in einem Umluft-Betriebszustand dem Fahrzeug-Innenraum (12) aus dieser angesaugte Luft zuführbar ist und durch die in einem Frischluft-Betriebszustand dem Fahrzeug-Innenraum (12) von außen angesaugte Luft zuführbar ist, und
- einer Steuereinheit (52) zur Steuerung zumindest des Gebläses (26), der Heiz-/Kühlvorrichtung (32) und der Umluft-/Außenluft-Verstellvorrichtung (28) in Abhängigkeit von zumindest dem Ist-Wert (T_{IST}) der Innenraumtemperatur und einem vorgebbaren Soll-Wert (T_{SOLL}) der Innenraumtemperatur,
**dadurch gekennzeichnet,**
- **daß** die Steuereinheit (52) derart ausgebildet ist, daß sie das Gebläse (26), die Heiz-/Kühlvorrichtung (32) und die Umluft-/Außenluft-Verstellvorrichtung (28) im Umluft-Betriebszustand unter anderem in Abhängigkeit von dem Soll-Wert (T_{SOLL}) und dem Ist-Wert (T_{IST}) der Innenraumtemperatur und einem vorgebbaren Offset-Wert (60) steuert und im Frischluft-Betriebszustand ohne Berücksichtigung dieses Offset-Werts steuert.

2. Klimaanlage nach Anspruch 1, **dadurch gekennzeichnet, daß** die Steuereinheit (52) den Offset-Wert (60) beim Umschalten vom Frischluft-Betrieb auf den Umluft-Betrieb und/oder umgekehrt zeitverzögert berücksichtigt.

3. Klimaanlage für den Innenraum eines Fahrzeuges mit
- einem Innenraumtemperaturfühler (46) zur Ermittlung des Ist-Werts (T_{IST}) der Temperatur im Fahrzeug-Innenraum (12),
- einem Gebläse (26) zum Zuführen von Luft in den Fahrzeug-Innenraum (12),
- einer Heiz-/Kühlvorrichtung (32) zum Temperieren der dem Fahrzeug-Innenraum (12) zuzuführenden Luft,
- einer Umluft-/Außenluft-Verstellvorrichtung (28), durch die in einem Umluft-Betriebszustand dem Fahrzeug-Innenraum (12) aus dieser angesaugte Luft zuführbar ist und durch die in einem Frischluft-Betriebszustand dem Fahrzeug-Innenraum (12) von außen angesaugte Luft zuführbar ist, und
- einer Steuereinheit (52) zur Steuerung zumindest des Gebläses (26), der Heiz-/Kühlvorrichtung (32) und der Umluft-/Außenluft-Verstellvorrichtung (28) in Abhängigkeit von zumindest dem Ist-Wert (T_{IST}) der Innenraumtemperatur und einem vorgebbaren Soll-Wert (T_{SOLL}) der Innenraumtemperatur,
**dadurch gekennzeichnet,**
- **daß** die Steuereinheit (52) derart ausgebildet ist, daß sie das Gebläse (26), die Heiz-/Kühlvorrichtung (32) und die Umluft-/Außenluft-Verstellvorrichtung (28) für eine vorgebbare Anfangszeitspanne nach einem Umschalten vom Umluft-Betriebszustand in den Frischluft-Betriebszustand unter anderem in Abhängigkeit von dem Soll-Wert (T_{SOLL}) der Innenraumtemperatur und dem letzten im Umluft-Betriebszustand ermittelten Ist-Wert (T_{IST}) der Innenraumtemperatur steuert und außerhalb der Anfangszeitspanne unter anderem in Abhängigkeit von dem Soll-Wert (T_{SOLL}) und dem jeweils aktuell ermittelten Ist-Wert (T_{IST}) der Innenraumtemperatur steuert.

4. Klimaanlage für den Innenraum eines Fahrzeuges mit
- einem Innenraumtemperaturfühler (46) zur Ermittlung des Ist-Werts (T_{IST}) der Temperatur im Fahrzeug-Innenraum (12),
- einem Gebläse (26) zum Zuführen von Luft in den Fahrzeug-Innenraum (12),
- einer Heiz-/Kühlvorrichtung (32) zum Temperieren der dem Fahrzeug-Innenraum (12) zuzuführenden Luft,
- einer Umluft-/Außenluft-Verstellvorrichtung (28), durch die in einem Umluft-Betriebszustand dem Fahrzeug-Innenraum (12) aus dieser angesaugte Luft zuführbar ist und durch die in einem Frischluft-Betriebszustand dem Fahrzeug-Innenraum (12) von außen angesaugte Luft zuführbar ist, und
- einer Steuereinheit (52) zur Steuerung zumindest des Gebläses (26), der Heiz-/Kühlvorrichtung (32) und der Umluft-/Außenluft-Verstellvorrichtung (28) in Abhängigkeit von zumindest dem Ist-Wert (T_{IST}) der Innenraumtemperatur und einem vorgebbaren Soll-Wert (T_{SOLL}) der Innenraumtemperatur,
**dadurch gekennzeichnet,**
- **daß** für eine vorgebbare Anfangszeitspanne nach einem Umschalten vom Umluft-Betriebszustand in den Frischluft-Betriebszustand der Innenraumtemperaturfühler (46) mit einem Tiefpaßfilter (68) verbunden ist, und
- **daß** die Steuereinheit (52) derart ausgebildet ist, daß sie das Gebläse (26), die Heiz-/Kühlvorrichtung (32) und die Umluft-/Außenluft-Verstellvorrichtung (28) während der Anfangszeitspanne in Abhängigkeit unter anderem von dem Soll-Wert (T_{SOLL}) der Innenraumtemperatur und dem anhand des Ausgangssignals des Tiefpaßfilters (68) ermittelten Ist-Wert (T_{IST}) der Innenraumtemperatur steuert und außerhalb der Anfangszeitspanne in Abhängigkeit unter anderem von dem Soll-Wert (T_{SOLL}) der Innenraumtemperatur und dem anhand des Innenraumtemperaturfühlers (46) ermittelten Ist-Wert (T_{IST}) der Innenraumtemperatur steuert.

## Claims

1. Air-conditioning system for a vehicle interior, with
• an interior temperature sensor (46) for determining the actual value (TIST) of the temperature in the vehicle interior (12),
• a fan (26) for supplying air to the vehicle interior (12),
• a heater/cooler unit (32) for controlling the temperature of the air to be supplied to the vehicle,interior (12),
• a recirculated-air/external-air setting device (28) which in a recirculated-air mode allows the vehicle interior (12) to be resupplied with air which has been drawn therefrom and which in an external-air mode allows the vehicle interior (12) to be supplied with air drawn from outside the vehicle, and
• a control unit (52) for controlling at least the fan (26), the heater/cooler unit (32) and the recirculated-air/external-air setting device (28) as a function of at least the actual value (TIST) of the interior temperature and a selectable set value (TSOLL) of the interior temperature,
**characterized in that**
• the control unit (52) is configured to control the fan (26), the heater-cooler unit (32) and the recirculated-air/extemal-air setting device (28) in recirculated-air mode inter alia as a function of the set value (TSOLL) and actual value (TIST) of the interior temperature and a selectable offset value (60), and in external-air mode without responding to this offset value.

2. Air-conditioning system according to Claim 1, **characterized in that** the control unit (52) responds with a time lag to the offset value (60) upon changeover from external-air mode to recirculated-air mode and/or vice-versa.

3. Air-conditioning system for a vehicle interior, with
• an interior temperature sensor (46) for determining the actual value (TIST) of the temperature in the vehicle interior (12),
• a fan (26) for supplying air to the vehicle interior (12),
• a heater/cooler unit (32) for controlling the temperature of the air to be supplied to the vehicle interior (12),
• a recirculated-air/external-air setting device (28) which in a recirculated-air mode allows the vehicle interior (12) to be resupplied with air which has been drawn therefrom and which in an external-air mode allows the vehicle interior (12) to be supplied with air drawn from outside the vehicle, and
• a control unit (52) for controlling at least the fan (26), the heater/cooler unit (32) and the recirculated-air/external-air setting device (28) as a function of at least the actual value (TIST) of the interior temperature and a selectable set value (TSOLL) of the interior temperature,
**characterized in that**
• the control unit (52) is configured to control the fan (26), the heater-cooler unit (32) and the recirculated-air/extemal-air setting device (28) for a selectable initial time-interval after a changeover from recirculated-air mode to external-air mode inter alia as a function of the set value (TSOLL) of the interior temperature and the actual value (TIST) of interior temperature last determined in recirculated-air mode, and outside the initial time-interval inter alia as a function of the set value (TSOLL) and the presently determined actual value (TIST) of the interior temperature.

4. Air-conditioning system for a vehicle interior, with
• an interior temperature sensor (46) for determining the actual value (TIST) of the temperature in the vehicle interior (12),
• a fan (26) for supplying air to the vehicle interior (12),
• a heater/cooler unit (32) for controlling the temperature of the air to be supplied to the vehicle interior (12),
• a recirculated-air/external-air setting device (28) which in a recirculated-air mode allows the vehicle interior (12) to be resupplied with air which has been drawn therefrom and which in an external-air mode allows the vehicle interior (12) to be supplied with air drawn from outside the vehicle, and
• a control unit (52) for controlling at least the fan (26), the heater/cooler unit (32) and the recirculated-air/external-air setting device (28) as a function of at least the actual value (TIST) of the interior temperature and a selectable set value (TSOLL) of the interior temperature,
**characterized in that**
• for a selectable initial time-interval after a changeover from recirculated-air mode to external-air mode the interior temperature sensor (46) is connected to a low-pass filter (68), and
• **in that** the control unit (52) is configured to control the fan (26), the heater-cooler unit (32) and the recirculated-air/external-air setting device (28) during the initial time-interval as a function of inter alia the set value (TSOLL) of the interior temperature and the actual value (TIST) of interior temperature determined from the output signal of the low-pass filter (68), and outside the initial time-interval as a function of inter alia the set value (TSOLL) of the interior temperature and the actual value (TIST) of interior temperature directly determined by means of the interior temperature sensor (46).

## Revendications

1. Dispositif de climatisation pour l'habitacle d'un véhicule équipé
- d'un capteur de température d'habitacle (46) en vue de la recherche de la valeur réelle (T_{REELLE}) de la température dans l'habitacle (12) d'un véhicule,
- d'un ventilateur (26) en vue de la délivrance d'air dans l'habitacle (12) du véhicule,
- d'un dispositif de chauffage/refroidissement (32) en vue de l'équilibrage de température de l'air délivré dans l'habitacle (12) du véhicule,
- d'un dispositif de réglage d'air ambiant/air extérieur (28), grâce auquel de l'air aspiré à l'extérieur de celui-ci est délivré dans un mode air ambiant dans l'habitacle (12) du véhicule et grâce auquel de l'air aspiré depuis l'extérieur est délivré dans un mode air extérieur dans l'habitacle (12) du véhicule, et
- d'une unité de commande (52) en vue de la commande au moins du ventilateur (26), du dispositif de chauffage/refroidissement (32) et du dispositif ajustable air ambiant/air extérieur (28) en fonction d'au moins la valeur réelle (T_{REELLE}) de la température de l'habitacle et d'une valeur de consigne (T_{CONSIGNE}) détectable de la température d'habitacle,
**caractérisé en ce que**
- l'unité de commande (52) est réalisée de sorte qu'elle commande le ventilateur (26), le dispositif de chauffage/refroidissement (32) et le dispositif ajustable air ambiant/air extérieur (28) en mode air ambiant entre autres en fonction de la valeur de consigne (T_{CONSIGNE}) et de la valeur réelle (T_{REELLE}) de la température d'habitacle et d'une valeur de décalage (60) détectable et commande en mode air extérieur indépendamment de cette valeur de décalage.

2. Dispositif de climatisation selon la revendication 1, **caractérisé en ce que** l'unité de commande (52) prend en considération la valeur de décalage (60) lors de la commutation du mode air frais en mode climatisation et/ou vice-versa temporairement.

3. Dispositif de climatisation pour l'habitacle d'un véhicule équipé
- d'un capteur de température d'habitacle (46) en vue de la détection de la valeur réelle (T_{REELLE}) de la température dans un habitacle (12) de véhicule,
- d'un ventilateur (26) en vue de la délivrance d'air dans l'habitacle (12) de véhicule,
- d'un dispositif de chauffage/refroidissement (32) en vue de l'équilibrage de température de l'air délivré dans l'habitacle (12) de véhicule,
- d'un dispositif ajustable air ambiant/air extérieur (28), grâce auquel l'air aspiré à l'extérieur celui-ci dans un mode air ambiant dans l'habitacle (12) du véhicule est délivré et grâce auquel l'air aspiré depuis l'extérieur dans un mode air extérieur dans l'habitacle (12) de véhicule est délivré, et
- d'une unité de commande (52) en vue de la commande au moins d'un ventilateur (26), du dispositif de chauffage/refroidissement (32) et du dispositif ajustable air ambiant/air extérieur (28) en fonction d'au moins la valeur de réelle (T_{REELLE}) de la température d'habitacle et d'une valeur de consigne (T_{CONSIGNE}) détectable de la température d'habitacle,
**caractérisé en ce que**
- l'unité de commande (52) est réalisée de sorte qu'elle commande le ventilateur (26), le dispositif de chauffage/refroidissement (32) et le dispositif ajustable air ambiant/air extérieur (28) pour une période de temps de début détectable après commutation du mode air ambiant en mode air extérieur entre autres en fonction de la valeur de consigne (T_{CONSIGNE}) de la température d'habitacle et de la dernière valeur réelle (T_{REELLE}) de la température d'habitacle détectée en mode air ambiant et commande, à l'extérieur de cette période de temps de début, entre autres en fonction de la valeur de consigne (T_{CONSIGNE}) et de la valeur réelle (T_{REELLE}) détectée actuelle respectivement de la température d'habitacle.

4. Dispositif de climatisation pour l'habitacle d'un véhicule équipé
- d'un capteur de température d'habitacle (46) en vue de la détection de la valeur réelle (T_{REELLE}) de température dans l'habitacle (12) de véhicule,
- d'un ventilateur (26) en vue de la délivrance d'air dans l'habitacle (12) du véhicule,
- d'un dispositif de chauffage/refroidissement (32) en vue de l'équilibrage de température de l'air délivré dans l'habitacle (12) du véhicule,
- d'un dispositif ajustable air ambiant/air extérieur (28), grâce auquel l'air aspiré à l'extérieur de celui-ci dans un mode air ambiant dans l'habitacle (12) du véhicule est délivré et grâce auquel l'air aspiré depuis l'extérieur dans un mode air extérieur dans l'habitacle (12) du véhicule est délivré, et
- d'une unité de commande (52) en vue de la commande au moins d'un ventilateur (26), du dispositif de chauffage/refroidissement (32) et du dispositif ajustable air ambiant/air extérieur (28) en fonction d'au moins la valeur de réelle (T_{REELLE}) de la température d'habitacle et d'une valeur de consigne (T_{CONSIGNE}) détectable de la température d'habitacle,
**caractérisé en ce que**
- pour une période de temps de début détectable, après une commutation du mode air ambiant en mode air extérieur, le capteur de température d'habitacle (46) est relié à un filtre passe-bas (68), et
- **en ce que** l'unité de commande (52) est réalisée, de sorte qu'elle commande le ventilateur (26), le dispositif de chauffage/refroidissement (32) et le dispositif ajustable air ambiant/air extérieur (28) pendant la période de temps de début en fonction entre autres de la valeur de consigne (T_{CONSIGNE}) de la température d'habitacle et de la valeur réelle (T_{REELLE}) détectée en regard du signal de sortie du filtre passe-bas (68) de la température d'habitacle et à l'extérieur de la période de temps de début commande en fonction entre autres de la valeur de consigne (T_{CONSIGNE}) de la température d'habitacle et de la valeur réelle (T_{REELLE}) détectée directement en regard du capteur de température d'habitacle (46).
